# EUROPEAN PATENT APPLICATION

(11) **EP 4 424 986 A1**
(43) Date of publication of application: **04.09.2024**
(21) Application number: 22886647.1
(22) Date of filing: 07.10.2022
(51) Int. Cl.: F03D 1/06, B64C 11/16

(54) **HOLLOW STRUCTURE AND PROPELLER BLADE**

(30) Priority: 29.10.2021 JP 2021177144
(71) Applicant: Toray Industries, Inc., Tokyo 103-8666 (JP)
(72) Inventor: YAMANAKA, Yusuke, Nagoya-shi, Aichi 455-8502 (JP); MATSUSHIMA, Shogo, Nagoya-shi, Aichi 455-8502 (JP); NISHIZAKI, Akihiko, Nagoya-shi, Aichi 455-8502 (JP); SEIKE, Satoshi, Nagoya-shi, Aichi 455-8502 (JP)
(74) Representative: Hoefer & Partner Patentanwälte mbB
(86) International application number: PCT/JP2022/037595
(87) International publication number: WO 2023/074316

(57) **Abstract**

A problem to be addressed by the present invention is to provide a hollow structure, particularly propeller blade, having excellent productivity, high strength, light weight, and high quality. The gist of the present invention is to provide a hollow structure made of a resin, including: a skin portion forming the outer surface of the hollow structure; a retaining section integrated with the skin portion, and supporting the skin portion from the inside thereof; and a space in the structure; wherein at least one of the retaining sections is configured to define, from a point of joining, the shortest line segment connecting a face of joining including the point of joining to the opposed face of joining, and is configured such that, in a cross section (referred to as a "cross section 1" for convenience) taken by cutting the structure along a plane passing through the midpoint of the line segment, and including a cross section perpendicular to the line segment, a straight line crosses the skin portion and the retaining section at three or more points, the straight line (referred to as a "straight line 1" for convenience) connecting the midpoints of the short sides of a rectangle defined so as to circumscribe the cross section, and have the minimum area.

## Description

### Technical Field

The present invention relates to a hollow structure, particularly a propeller blade.

### Background Art

A hollow structure is widely used in the industrial field because the structure can be reduced in weight as well as maintain high strength and rigidity. In particular, a propeller blade is desired to be light in weight and have high rigidity, and thus, is suitable as an application of a hollow structure.

A propeller blade has an airfoil shape, and rotates about a drive shaft to push air backward, thus generating thrust. Reducing the weight of a propeller blade contributes to increasing the payload and cruising range of an aircraft, and hence, a high-strength and high-rigidity fiber-reinforced material is used as the structural material.

Examples of a known structure of a propeller blade include: a sandwich structure in which the skin layer is a fiber-reinforced resin, and the core layer is a porous foam core; and a structure in which a hollow section is provided, and a shear web is provided in order to retain the airfoil shape.

### Citation List

### Patent Literature

Patent Literature 1: JP2011-137386A
Patent Literature 2: JP2017-129091A
Patent Literature 3: JP6066548B2
Patent Literature 4: EP3556544A1

### Summary of Invention

### Technical Problem

A hollow structure is widely used in the industrial field because the structure can be reduced in weight as well as maintain high strength and rigidity. In particular, in a case where a fiber-reinforced material is used as the structural material, the structure can be reduced in weight as well as maintain high rigidity and strength, and thus, is suitable. In general, examples of a method of producing a hollow shape include: a method in which members are produced in halved shape, and then joined; a method in which a hollow-shaped core is provided, a structure is formed on the outer surface of the core, which is then removed; and a method in which a bag-shaped means for applying internal pressure is provided, and a material is pressed against a mold by the internal pressure to form a hollow shape.

In a case where members are produced in halved shape, and the members produced are joined, the joint is prone to generate a defect. In a case where the members contain a fiber-reinforced layer, the fibers become partially discontinuous, so that the joint tends to have a lower strength.

The core is required in order to support the hollow structure, but needs to be taken out after completion of molding, and hence, does not have a high degree of freedom in configuration.

In a case where a core is used to produce a hollow section having a complicated shape, such as a long bent shape, a shape having a plurality of branches, or a shape having varying cross sections, the shape of the hollow section is restricted so that the core can be taken out after molding. In addition, there is also a method in which, after the material is molded, a core is melted and taken out. However, it takes time to take out the core, and it is difficult to take out the core material completely, resulting in poor productivity and a poor weight-reducing effect. In addition, a hollow shape in some cases makes it possible that providing a retaining section for reinforcement in the hollow section increases the strength and rigidity effectively as well as maintains a weight-reducing effect. In particular, for a structure having a complicated shape and being susceptible to a local force, the advantage of having such a retaining section is great. On the other hand, it is difficult to precisely mold the retaining section using the core, and the shape of the retaining section is also restricted to a shape that allows the core to be demolded.

Also in the case of using a mold and a bag-shaped means for applying internal pressure, it is possible that the bag, when used for a molded product of interest having a complicated shape, breaks during the demolding of the molded product, and that the bag is not completely taken out. Furthermore, it is more difficult to precisely provide the retaining section.

A propeller blade provided with a hollow section has a greater weight-reducing advantage in accordance with an increase in the cross section of the blade than a propeller blade having a porous core layer such as a foam core in the inner layer of the skin layer.

A known method of producing a propeller blade provided with a hollow section is, for example, a method in which, as in Patent Literature 1, a propeller blade is divided into the suction side section and the pressure side section; the skin layers for the respective sections are molded with a fiber-reinforced material; and then, the sections are joined. However, the strength of the joint is weak, resulting in low impact resistance. The joining process takes a long time, resulting in poor productivity. Furthermore, the joint is nonuniform, resulting in poor product quality.

In addition, as described in Patent Literature 2, a method is known in which a core is produced with a low-melting-point material, and then a fiber base material is preformed around the core, and molded in a mold. In this case, the molding temperature cannot be raised to a temperature equal to or greater than the melting temperature of the core during molding, and the molding takes time. When a core having a high melting temperature is used to shorten the molding time, a high temperature is needed to take out the core, resulting in reducing the productivity.

In addition, for an unmelted core to be pulled out to be removed, the structure of the hollow section needs to be designed so that the core can be pulled out, and involves design restrictions. This is disadvantageous in terms of the strength and weight reduction of a propeller blade, and moreover, needs a pull-out process, thus causing a decrease in the productivity. To improve the designability of the structure of the hollow section, such a method as described in Patent Literature 3 includes preforming a fiber-reinforced material in a mold, then closing the mold with a bag disposed therein, and inflating the bag, which applies an internal pressure to the mold. However, the work time for the preforming is long, causing the productivity to be poorer. Moreover, two or more independent bags need to be used to form a shear web, making it difficult to control the positions of the bags, and thus resulting in poorer product quality.

With such a conventional technology as above-described, it is difficult to produce a propeller blade having a hollow structure, and having excellent productivity, high strength, light weight, and high quality.

In view of this, an object of the present invention is to provide a propeller blade having a hollow structure, and having excellent productivity, high strength, light weight, and high quality.

Another object is to provide a hollow structure having excellent productivity, high strength, light weight, and high quality.

### Solution to Problem

To solve such problems, the present invention adopts the following means.
[1] A hollow structure made of a resin, including: a skin portion forming the outer surface of the hollow structure; a retaining section integrated with the skin portion, and supporting the skin portion from the inside thereof; and a space in the structure; wherein at least one of said retaining sections is configured such that, in a cross section (referred to as a "cross section 1" for convenience) taken by cutting the structure along a plane passing through the midpoint of a line segment, which is defined as the shortest line segment from a point of joining and connecting a face of joining including said point of joining to the opposed face of joining, and being perpendicular to said line segment, a straight line crosses said skin portion and said retaining section at three or more points, said straight line being parallel to a straight line (referred to as a "straight line 1" for convenience) connecting the midpoints of the short sides of a rectangle defined so as to circumscribe said cross section, and have the minimum area..
[2] The hollow structure according to [1], including a fiber-reinforced resin layer on the outer surface of the structure.
[3] A propeller blade including the hollow structure according to [1] or [2], wherein at least one of the retaining sections is configured such that a face (referred to as a "cross section 2" for convenience) dividing the pressure surface side and the suction surface side is parallel to the cross section 1, and such that a straight line passing through the blade tip and the blade root on the cross section 2 crosses the skin portion and the retaining section at three or more points, and is parallel to the straight line 1.
[4] The propeller blade according to [3], wherein at least one of the retaining sections has a bent portion bent in the chordwise direction.
[5] The hollow structure according to [3] or [4], wherein at least one of the retaining sections has a lightening portion, and the lightening portion is provided so as to be observable in a vertical cross section dividing the propeller blade into the pressure surface side and the suction surface side.
[6] The propeller blade according to any one of [3] to [5], wherein two or more of the retaining sections are provided.
[7] The propeller blade according to any one of [3] to [6], including a retaining section having a length of less than 30% of the blade length of the propeller blade in the spanwise direction, and having a length of less than 30% of the chord length of the propeller blade in the chordwise direction at the center of the airfoil-retaining section in the spanwise direction.
[8] The propeller blade according to any one of [3] to [7], wherein the thickness of the skin portion is 15 mm or less and 0.2 mm or more.
[9] The propeller blade according to any one of [3] to [8], wherein the thickness of the skin portion is 300% or less, taking that the thickness of the fiber-reinforced resin layer as 100%.
[10] The propeller blade according to any one of [3] to [9], wherein the skin portion has a mesh structure.
[11] The propeller blade according to any one of [3] to [10], wherein, in the first structure, a recess is formed on the outer surface side of the skin portion at the portion of contact between the skin portion and one of the retaining sections, the one supporting the blade in the thickness direction.
[12] The propeller blade according to any one of [3] to [11], wherein the volume of the space in the structure is 30% or more of the volume of the propeller blade.
[13] The propeller blade according to any one of [3] to [12], wherein the resin constituting the structure is a resin the glass transition temperature of which is not observed at 90°C or less.
[14] The propeller blade according to any one of [3] to [13], wherein the structure contains a filler.
[15] The propeller blade according to any one of [3] to [14], wherein a carbon fiber is used as a fiber used in the fiber-reinforced resin layer.
[16] The propeller blade according to any one of [3] to [15], wherein the structure is produced by a three-dimensional printing method.

### Advantageous Effects of Invention

The present invention can provide a hollow structure having excellent productivity, high strength, light weight, and high quality, particularly a propeller blade having high strength, light weight, and high quality. In a case where a molded article according to the present invention is used particularly for a flight vehicle with many propeller blades, such as a UAM or a drone, the molded product has the effect of increasing the cruising range, increasing the payload, and the like because the propeller blade is reduced in weight.

### Brief Description of Drawings

Fig. 1 is a cross-sectional view of an example of a propeller blade according to the present invention.
Fig. 2 is a cross-sectional view of another example of a propeller blade according to the present invention.
Fig. 3 is a view for explaining an example of the configuration of an airfoil-retaining section.
Fig. 4 is a view for explaining an airfoil-retaining section having a bent portion and a curved portion in the chordwise direction.
Fig. 5 is view for explaining an airfoil-retaining section having a lightening portion; Fig. 5(a) is an example of an aspect of a circular lightening portion; and Fig. 5(b) is an example of an aspect of a triangular lightening portion.
Fig. 6 is a view for explaining a propeller blade provided with two or more airfoil-retaining sections.
Fig. 7 is an example of an airfoil-retaining section (local airfoil-retaining section).
Fig. 8 is a cross-sectional view of an example of a hollow structure according to the present invention (Fig. 8(a) is a cross-sectional view taken along A-A'; and Fig. 8(b) is a cross-sectional view taken along the plane 808).
Fig. 9 is a view for explaining a point of joining.

### Description of Embodiments

A hollow structure according to the present invention is characterized by being a hollow structure made of a resin, including: a skin portion forming the outer surface of the hollow structure; a retaining section integrated with the skin portion, and supporting the skin portion from the inside thereof; and a space in the structure, wherein at least one of said retaining sections is configured such that, in a cross section (referred to as a "cross section 1" for convenience) taken by cutting the structure along a plane passing through the midpoint of a line segment, which is defined as the shortest line segment from a point of joining and connecting a face of joining including said point of joining to the opposed face of joining, and being perpendicular to said line segment, a straight line crosses said skin portion and said retaining section at three or more points, said straight line being parallel to a straight line (referred to as a "straight line 1" for convenience) connecting the midpoints of the short sides of a rectangle defined so as to circumscribe said cross section, and have the minimum area.

A hollow structure according to the present invention includes; a skin portion forming the outer surface; and a retaining section integrated with the skin portion, and supporting the skin portion from the inside thereof. The hollow structure is characterized by the configuration of the retaining section.

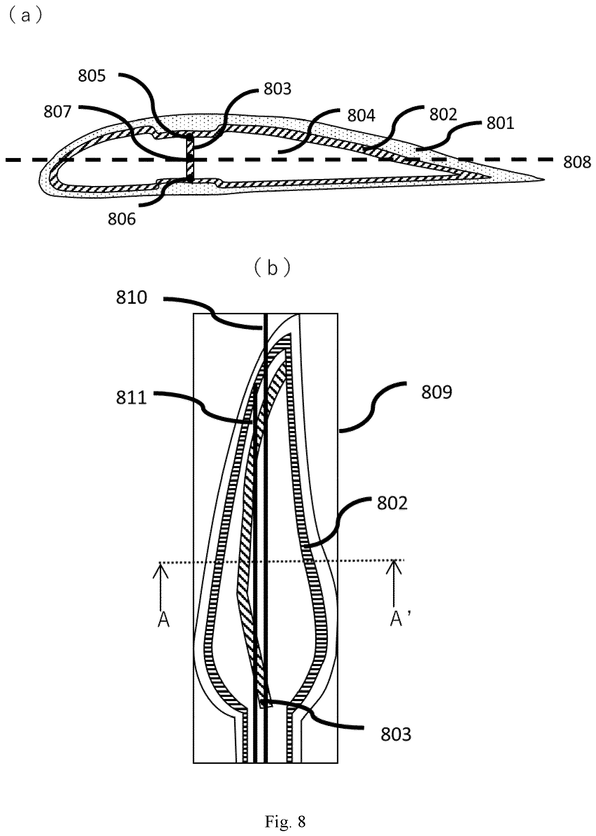

An example of a hollow structure according to the present invention is shown in Fig. 8. In the hollow structure in Fig. 8, a retaining section 803 is configured to support a skin layer. A point of joining 805 included in one face of joining and a point of joining 806 included in the other face of joining represent the end points of the shortest line segment connecting the faces of joining. This retaining section 803 is configured such that, in a cross section 808 (corresponding to the "cross section 1") taken by cutting the structure along a plane passing through the midpoint 807 of the line segment, and including a cross section perpendicular to the line segment, a straight line 811 crosses the skin portion and the retaining section at three or more points, preferably four or more points, more preferably five or more points, the straight line being parallel to a straight line 810 (corresponding to the "straight line 1") connecting the midpoints of the short sides of a rectangle 809 defined so as to circumscribe the cross section, and have the minimum area.

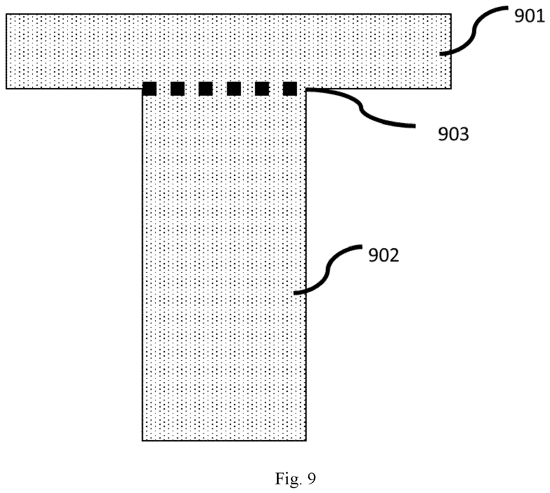

In the hollow structure according to the present invention, the retaining section is provided in the hollow section, and the skin portion and the retaining section are integrated. Here, being integrated means being fused without forming a physical interface, and does not refer to a structure in which different members are combined by joining, such as adhesion with an adhesive, riveting, or the like. Accordingly, a face of joining referred to in the present invention is a virtual face that is formed by contact between the skin portion and the outer surface of a member constituting the retaining section, and that is in the same face as the inner face of the skin layer. A point of joining means a virtual point at which the retaining section and the skin portion are in contact. As shown in Fig. 9, the point of joining is a point provided in a face of joining 903 that is where the skin portion 901 and the retaining section 902 are integrated, and that is given by subtracting the equivalent to the thickness of the surrounding skin from the surface of the structure.

Having such a structure makes it possible to locally reinforce a fragile portion, and to achieve high strength as well as keep the weight of the whole structure light. Furthermore, the retaining section and the skin portion are molded in the form of an integral structure, and thus, the retaining section is configured precisely with respect to the skin portion, so that a high-quality molded product with little unevenness is obtained.

In addition, a hollow structure according to the present invention has a fiber-reinforced resin layer on the outer surface side of the structure. Providing a fiber-reinforced resin layer on the outer surface of the hollow structure makes it possible to reinforce the structure effectively, and in addition, makes it easier to preform the fiber-reinforced resin layer on the outer surface of the hollow structure when the fiber-reinforced resin layer is molded. Thus, such a structure has excellent moldability.

In addition, a hollow structure, particularly a propeller blade, according to the present invention is characterized by including a skin portion forming the airfoil-shaped outer surface and an airfoil-retaining section integrated with the skin portion, and supporting the skin portion from the inside thereof, and by including a first resin structure (hollow structure) having a space inside and a fiber-reinforced resin layer on the outer surface side of the first structure.

In addition, one preferable aspect of the present invention is a propeller blade that includes a skin portion forming the airfoil-shaped outer surface and an airfoil-retaining section integrated with the skin portion, and supporting the skin portion from the inside thereof, and that includes a first structure having a space inside and a fiber-reinforced resin layer on the outer surface side of the first structure.

Below, the present invention will be described in detail with reference to the drawings, taking, as a representative example, an example applicable to a propeller blade.

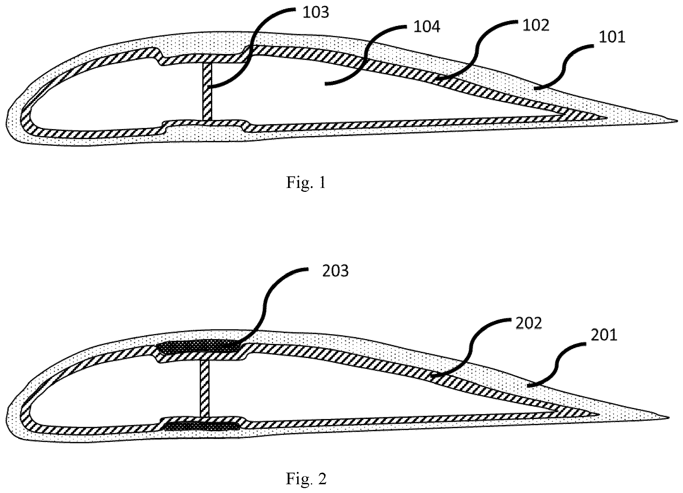

Fig. 1 shows a cross-sectional view taken in the chordwise direction of one aspect of a propeller blade according to the present invention. Here, the chordwise direction is a direction that connects the leading edge and trailing edge of the propeller blade. As shown in Fig. 1, a propeller blade according to the present invention has a fiber-reinforced resin layer 101, a skin portion 102, and a hollow section 104, and has an airfoil-retaining section 103 integrated with the skin portion in the hollow section.

### [First Structure (Hollow Structure)]

A first structure used in the present invention, when it is a propeller blade, includes a skin portion forming the airfoil-shaped outer surface, and an airfoil-retaining section integrated with the skin portion, and supporting the skin portion from the inside thereof. In addition, the first structure has a space inside.

The skin portion 102 and the airfoil-retaining section 103 form an integrated structure, and for example, have a structure in which the structures of the leading-edge portion, trailing-edge portion, pressure surface, and suction surface of the propeller blade are integrally formed. This first structure defines the general form of the propeller blade. For this reason, it is preferable that a material constituting the first structure does not contain continuous fibers, from the viewpoint of the capability to ensure the morphological degree of freedom, and that the material to be used has a given composition. This allows highly precise molding, and enables the resulting propeller structure to have high precision.

In addition, it is preferable that the material constituting the first structure contains a filler. It is more preferable that the filler can be used also when the first structure is formed by a 3D printing method. It is preferable that hollow glass beads are used. Using the hollow filler can reduce the weight of the propeller blade.

In addition, it is preferable that, in the first structure, a recess is formed on the outer surface side of the skin portion at the portion of joining between the skin portion and the airfoil-retaining section so that the recess can correspond to the airfoil-retaining section. In the recess, a fiber-reinforced resin material can be disposed to reinforce the portion of joining. Configuring, in this manner, the fiber-reinforced resin material from the root toward the tip of the propeller blade can reinforce the blade against a bending load applied thereto. In addition, the fiber-reinforced resin material provided in the recess is a resin material reinforced with fibers oriented in one direction, and the fibers are preferably continuous fibers, thereby affording a high reinforcing effect. In particular, a resin made of a unidirectional CFRP produced using carbon fiber can render the reinforcement more effective, and reduce the weight of the propeller blade. Fig. 2 shows an example of an aspect provided in the form of a spar cap, and shows a cross-sectional view taken in the chordwise direction of a propeller blade in which a spar cap 203 is provided in a recess for forming a spar cap. The formation of the recess makes it easier to position the fiber-reinforced resin material to form the material on the first structure, thereby enhancing the quality of the propeller blade. In a case where the depth of the recess is equalized with the thickness of the fiber-reinforced resin material, no unevenness is formed on the surface when the fiber-reinforced resin layer is provided, thus affording high quality, and being advantageous in a step of providing a fiber-reinforced resin layer on the further outer side. Furthermore, when press molding is performed in a producing mold, providing a unidirectionally oriented fiber-reinforced resin material in the recess does not cause the fiber bundles to be spread out by the pressing pressure, affording high quality.

In this regard, the first structure may be provided with a *keta*, or spar, for maintaining the form of the structure and with a *kobone*, or rib, to be attached to the *keta*, or spar, besides the below-described airfoil-retaining section.

A resin constituting the first structure may be, for example, but is not limited particularly to: a thermosetting resin such as epoxy resin, unsaturated polyester resin, vinyl ester resin, phenol resin, epoxy acrylate resin, urethane acrylate resin, phenoxy resin, alkyd resin, urethane resin, maleimide resin, or cyanate resin; polyethylene terephthalate (PET) resin; polybutylene terephthalate (PBT) resin; polytrimethylene terephthalate (PTT) resin; polyethylene (PE) resin; polypropylene (PP) resin; styrene-based resin; polyoxymethylene (POM) resin; polyamide (PA) resin; polycarbonate (PC) resin; polymethylene methacrylate (PMMA) resin; polyvinyl chloride (PVC) resin; polyphenylene sulfide (PPS) resin; polyphenylene ether (PPE) resin; modified PPE resin; polyimide (PI) resin; polyamideimide (PAI) resin; polyetherimide (PEI) resin; polysulfone (PSU) resin; modified PSU resin; polyethersulfone resin; polyketone (PK) resin; polyaryleneetherketone resin (PAEK); polyalylate (PAR) resin; polyethernitrile (PEN) resin; phenol-based resin; phenoxy resin; fluorine-based resin such as polytetrafluoroethylene resin; furthermore, thermoplastic elastomer or the like such as polystyrene-based resin, polyolefin-based resin, polyurethane-based resin, polyester-based resin, polyamide-based resin, polybutadiene-based resin, polyisoprene-based resin, fluorine-based resin, copolymer or modified product thereof, or thermoplastic resin obtained by blending two or more kinds thereof; or the like. Furthermore, the polyaryleneetherketone resin (PAEK) may be, for example, polyetherketone (PEK), polyetheretherketone (PEEK), polyetheretherketoneketone (PEEKK), polyetherketoneketone (PEKK), polyetherketoneetherketoneketone (PEKEKK), polyetheretherketoneetherketone (PEEKEK), polyetheretheretherketone (PEEEK), polyetherdiphenyletherketone (PEDEK), a copolymer or modified product thereof, a resin obtained by blending two or more kinds thereof, or the like. Among these resins, a resin the glass transition temperature and melting point of which are not observed at 90°C or less is preferably used, a resin the glass transition temperature and melting point of which are not observed at 115°C or less is more preferable, a resin the glass transition temperature and melting point of which are not observed at 130°C or less is still more preferable, and a resin the glass transition temperature and melting point of which are not observed at 180°C or less is still more preferable. In addition, among these resins, a resin that can be molded by a 3D printing method is preferable. The glass transition temperature and melting point can be measured in accordance with JIS K 7121-1987, and a measurement sample can be sampled from a propeller blade.

### [Skin Portion]

For example, in the case of a propeller blade, the skin portion has an airfoil-shaped outer surface, and constitutes part of the outer shell structure of the propeller blade. Together with the below-described fiber-reinforced resin layer, the skin portion functions as the skin (outer plate) of a propeller blade to play a role in withstanding a force applied to the propeller blade.

In the range of the thickness of the skin portion, the lower limit is preferably 0.2 mm or more, more preferably 0.5 mm or more, still more preferably 1 mm or more. Also, the upper limit is preferably 15 mm or less, preferably 10 mm or less, more preferably 5 mm or less. The skin portion having such a thickness makes it possible that, at a time when a fiber-reinforced resin layer is provided on the outer surface side of the first structure, the first structure is not deformed, and a load applied to the surface of the propeller blade is supported effectively. In addition, it is easy to attempt to reduce the weight of the propeller blade. The thickness of the skin portion does not need to be uniform, and may vary depending on the position.

The thickness of the skin portion is determined by observing, on an optical microscope, a cross section taken in the chordwise direction perpendicular to the spanwise direction of a propeller blade. Similarly, in the case of a common hollow structure, the thickness is determined by observing, on an optical microscope, a cross section taken along a plane along which the cross section is the minimum. The thickness of the skin portion is determined as follows: from regions having an approximately uniform thickness in the skin portion, for example, from the small-curvature regions of the pressure surface and suction surface of the propeller blade, regions having an abrupt change in thickness, such as ribs and slits, are excluded: a measurement point is set on the inner surface of the skin portion, which is a measurement object, so that the minimum thickness of the region can be measured; for measurement, a perpendicular line that passes through the measurement point, and crosses the inner surface perpendicularly is set; the point at which the perpendicular line and the outer surface of the layer as the measurement object cross each other is set as a measurement point on the outer surface; and the length between the measurement point on the inner surface and the measurement point on the outer surface is measured. Using, as a portion to be measured, the large-curvature portion of a propeller blade, such as the leading edge or the trailing edge, or a portion where two faces are joined makes it difficult to define the thickness of a layer, and thus, is not preferable.

In addition, the thickness of the skin portion is preferably 300% or less, more preferably 200% or less, still more preferably 100% or less, assuming that the thickness of the below-described fiber-reinforced resin layer is 100%. The skin portion having such a thickness affords a sufficient weight-reducing effect.

The thickness of the skin portion with respect to the thickness of the fiber-reinforced resin layer is determined by observing, on an optical microscope, a cross section taken in the chordwise direction perpendicular to the spanwise direction of a propeller blade. Similarly, in the case of a common hollow structure, the thickness is determined by observing, on an optical microscope, a cross section taken along a plane along which the cross section is the minimum. The thickness of the skin portion with respect to the thickness of the fiber-reinforced resin layer is determined as follows: from regions having an approximately uniform thickness in the skin of a propeller blade, for example, from the small-curvature regions of the pressure surface and suction surface of the propeller blade, regions having an abrupt change in thickness, such as ribs and slits, are excluded: a measurement point is set so that the point at which the thickness of the skin portion is the minimum can be measured; for measurement, the measurement point is set on the inner surface of the skin portion; a perpendicular line that passes through the measurement point, and crosses the inner surface perpendicularly is set; the point at which the perpendicular line and the outer surface of the layer as the measurement object cross each other is set as a measurement point on the outer surface; the length between the measurement point on the inner surface and the measurement point on the outer surface is measured to determine the thickness of the skin portion; and this thickness is divided by the thickness of the fiber-reinforced resin layer, in which the latter thickness is determined by extending the perpendicular line through the outer layer, and measuring the length between the points at which the perpendicular line crosses the outer layer, one point being on the inner surface of the fiber-reinforced resin layer, and the other point being on the outer surface of the resin layer. Using, as a portion to be measured, the large-curvature portion of a propeller blade, such as the leading edge or the trailing edge, or a portion where two faces are joined makes it difficult to define the thickness of a layer, and thus, is not preferable. In addition, the fiber-reinforced resin layers, even if composed of laminated layers having different orientations of fibers and different types of fibers, are regarded as a single layer. The fiber-reinforced resin layers having a sandwich structure with a foam material and/or a honeycomb core therebetween are also regarded as a single layer.

A slit or hole may be provided in part of the skin portion. The slit or hole can be used, for example, to reduce the weight of the propeller blade, serve as countermeasures against erosion of the propeller blade, or to have a metal member inserted for forming an electrically conductive path for a lightning stroke. The slit and hole are preferably smaller. For example, the length of the slit may extend over the blade length, but the width is preferably 5 mm or less, more preferably 3 mm or less, still more preferably 1 mm or less. In addition, the area of the hole is desirably 78.5 mm² or less, more desirably 28.3 mm² or less, still more desirably 3.1 mm² or less. Such a configuration makes it possible that, when a fiber-reinforced resin layer is formed, the layer is preformed on the basis of the shape of the first structure, and that, in a case where an external pressure is applied during the molding of a fiber-reinforced resin layer, the fiber-reinforced resin layer is supported from the inside against the external pressure. In particular, in the present invention, the skin portion of the first structure preferably has a mesh structure. Controlling the opening of the mesh holes makes it possible to reduce the weight as well as maintain the rigidity of the first structure. Here, the mesh structure is a region in which many holes are provided, and is a structure that maintains the form of a layer as well as achieve lightening.

### [Hollow Section]

The hollow section is a space provided inside the skin portion of the first structure.

The volume of the hollow section is preferably 30% or more, more preferably 40% or more, and still more preferably 50% or more, with respect to the volume of the propeller blade. The larger the volume of the hollow section is, the more the weight-reducing effect is afforded. The volume of the propeller blade may be measured by sinking the propeller blade in liquid, and measuring the excluded volume of the liquid, or by 3D scanning. In addition, the volume of the hollow section may be measured by filling the hollow section with liquid, and measuring the volume of the liquid, or the volume of the hollow section may be measured by CT scanning.

### [Airfoil-retaining Section]

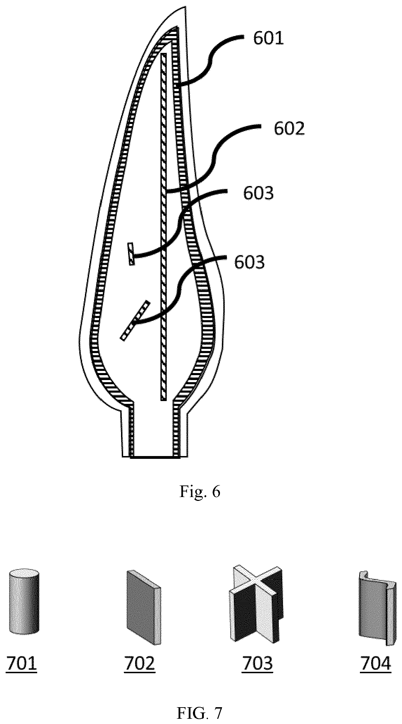

The first structure used in the present invention has an airfoil-retaining section in the hollow section thereof. The airfoil-retaining section is configured to prevent deformation, for example, when the propeller blade is subjected to an external force. In general, examples of the airfoil-retaining section include a thin-plate structure that is called a shear web, and that extends generally in the spanwise direction, and is connected in the blade-thickness direction. Here, the spanwise direction is the direction extending from the center of rotation of the propeller in the radial direction of rotation. The airfoil-retaining section is not limited to an aspect of a shear web, and may be, for example, in the form of a column, a flat plate, or a plate having a cross-shaped cross section, as illustrated in Fig. 7. Such a structure makes it possible to locally reinforce the structure. Furthermore, the airfoil-retaining section preferably has a structure in which a hollow section is maintained up to the blade root. For example, an airfoil-retaining section which does not allow a hollow section to extend up to the blade root, and which, together with the skin portion, forms a closed space is difficult to produce by a 3D printing method, and thus, is not preferable.

In addition, it is preferable that the airfoil-retaining section is configured such that the hollow section is shaded when viewed from the blade root in the spanwise direction in the case of the present invention, or when viewed in the longitudinal direction of the hollow structure in the case of a common hollow structure. Furthermore, it is more preferable that the airfoil-retaining section exists at the position of the shade. Such a structure makes it possible to locally reinforce the structure.

A preferable aspect of the present invention is a propeller blade that includes: a first structure that includes a skin portion forming the airfoil-shaped outer surface, an airfoil-retaining section integrated with the skin portion, and supporting the skin portion from the inside thereof, and a space inside; and a fiber-reinforced resin layer on the outer surface side of the first structure. At least one of the airfoil-retaining sections of the first structure is an aspect configured such that, in a cross section taken to divide the propeller blade into the pressure side section and the suction side section, a straight line parallel to a straight line passing through the blade tip and the blade root crosses the skin portion and the airfoil-retaining section at three or more points, preferably four or more points, and more preferably five or more points.

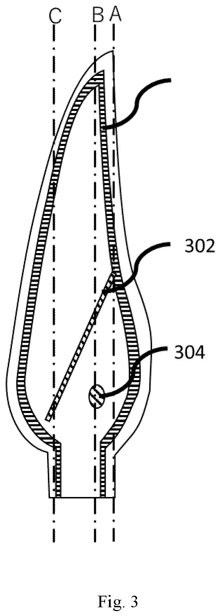

Fig. 3 shows a cross-sectional view (referred to as a "cross section 2" for convenience) taken to divide the propeller blade into the pressure surface side and the suction surface side. In the present invention, it is preferable that, in the first structure, the airfoil-retaining section is configured such that a straight line parallel to a straight line passing through the blade tip and blade root (the straight line represented by the dash-dotted line A in Fig. 3 corresponds to this) crosses a skin portion 301 and the airfoil-retaining section at three or more points. That is, in the drawing, the dash-dotted line B crosses an airfoil-retaining section 304, which is other than an airfoil-retaining section 302, and the skin portion on the blade tip side. In addition, the dash-dotted line C crosses the skin portion on the blade root side, the airfoil-retaining section 302, and the skin portion on the blade tip side. Configuring the airfoil-retaining section in this manner enables the airfoil-retaining section to be configured with a high degree of freedom, and is advantageous in reducing the weight of the propeller blade. Configuring the airfoil-retaining sections in this manner is difficult in molding with a normal mold, but producing the first structure, for example, by a 3D printing method can produce the structure highly precisely and integrally. However, in a case where the straight line passing through the blade tip and blade root passes through a portion other than the cross section between the blade tip and blade root, the straight line can be replaced by a straight line parallel to the long side of the rectangle circumscribing the cross section, and having the minimum area.

In addition, in a preferable aspect, the cross section 2 is parallel to the cross section 1, and a straight line that is on the cross section 2, passes through the blade tip and the blade root, and crosses the skin portion 301 and the airfoil-retaining section at three or more points is parallel to the straight line 1.

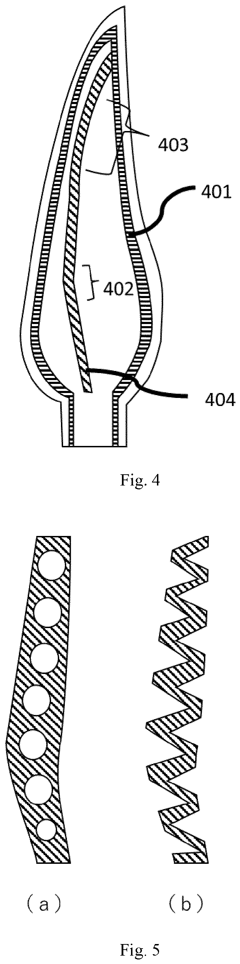

In addition, it is preferable that the airfoil-retaining section has a bent portion or a curved portion, for example, in the chordwise direction, or in the direction perpendicular to the longitudinal direction of the hollow structure in the case of a common hollow structure. Both cases are aspects in which the direction in which the airfoil-retaining section 404 extends changes in the chordwise direction when viewed from the pressure surface side. The bent portion shows a change such that two straight lines meet, and the curved portion shows a curved change. In addition, the airfoil-retaining section may have a corrugated-plate structure having cyclically curved portions. Fig. 4 shows a cross-sectional view taken to divide the propeller blade into the pressure surface side and the suction surface side. A bent portion 402 in the chordwise direction and a curved portion 403 are provided as bent portions of an airfoil-retaining structure. An airfoil-retaining section having such a structure enables an airfoil-retaining section 404 to be configured optimally, and enables the propeller blade to be reduced in weight. Such a structure can be produced highly precisely and integrally, for example, by a 3D printing method.

In addition, the airfoil-retaining section preferably has a length of, for example, 30% or more of the blade length of the propeller blade, or a length of 30% or more of the longitudinal length of the hollow structure in the case of a common hollow structure. Examples of such an airfoil-retaining section include a common shear web (spar material). In addition, the airfoil-retaining section preferably has a branching portion. For example, a structure in which a shear-web-like structure is bifurcated toward the blade root, or a structure having branches in vein form toward the blade tip from the blade root can reinforce the propeller blade effectively. As a method of measuring the length of the airfoil-retaining section in the spanwise direction may be, for example, as follows: a propeller blade is cut in the spanwise direction, and the points of contact between the airfoil-retaining section and the skin portion are observed in the cross section, and the length in the spanwise direction between the outermost blade-root-side point and the outermost blade-tip-side point is measured with a ruler or vernier calipers; or the points of contact between the airfoil-retaining section and the skin portion are observed by a CT scanning to measure the length in the spanwise direction between the outermost blade-root-side point and the outermost blade-tip-side point.

In addition, it is preferable that the airfoil-retaining section is provided in an aspect observable in a vertical cross section dividing the propeller blade into the pressure surface side and the suction surface side. The airfoil-retaining section preferably has a length of 30% or more of the length of the propeller blade in the spanwise direction. Fig. 5 shows an example of an airfoil-retaining section provided with lightening portions. In the aspect shown in Fig. 5(a), the lightening is in a circular form, and in the aspect shown in Fig. 5(b), the lightening is in a triangular form. Having such a form makes it possible to reduce the weight as well as maintain the reinforcing effect of the propeller blade. Such a structure can be produced highly precisely and integrally, for example, by a 3D printing method.

In addition, it is preferable to provide two or more airfoil-retaining sections. For example, the length of each airfoil-retaining section in the spanwise direction can be set independently, but it is preferable that one of the airfoil-retaining sections has a length of 30% or more of the blade length of the propeller blade in the spanwise direction, and that the other has a length of less than 30% of the blade length of the propeller blade in the spanwise direction. Fig. 6 shows a cross-sectional view taken to divide the propeller blade into the pressure surface side and the suction surface side. Two or more airfoil-retaining sections 602 and 603 are provided. Configuring the airfoil-retaining sections in such a manner enables the airfoil-retaining sections to support the skin portion effectively and efficiently, and consequently makes it possible to attempt to reduce the weight of the propeller blade. Such a structure can be integrally produced with high precision by producing the first structure, for example, by a 3D printing method.

In addition, the present invention preferably has an airfoil-retaining section having a length of, for example, less than 30% of the blade length of the propeller blade in the spanwise direction, and having a length of less than 30% of the chord of the propeller blade in the chordwise direction at the center of the airfoil-retaining section in the spanwise direction. In the case of a common hollow structure, the airfoil-retaining section preferably has a length of less than 30% of the longitudinal length of the hollow structure, and has a length of less than 30% of the chord of the propeller blade in the direction perpendicular to the longitudinal direction (such an airfoil-retaining section is referred to as a "locally retaining section" for convenience). Such an airfoil-retaining section is shorter in the spanwise direction than a common shear web structure, and in addition, is shorter in the chordwise direction than a common rib structure. Such a structure makes it possible to locally reinforce a fragile portion. Here, the center of the airfoil-retaining section in the spanwise direction is the midpoint between the outermost blade-root-side point and outermost blade-tip-side point of the airfoil-retaining section, and may be determined, for example, as follows: a propeller blade is cut in the spanwise direction, and the airfoil-retaining section in the cross section is observed, and the midpoint in the spanwise direction between the outermost blade-root-side point and the outermost blade-tip-side point is measured with a ruler or vernier calipers; or the outermost blade-root-side point and outermost blade-tip-side point of the airfoil-retaining section are observed by a CT scanning to determine the midpoint. In addition, the length in the chordwise direction is a length between the endmost leading edge and the endmost trailing edge on a plane parallel in the blade-thickness direction and perpendicular to the spanwise direction at the position of measurement. For example, a length between the leading edge and the trailing edge of a propeller blade may be measured with vernier calipers or a ruler. Furthermore, as a method of measuring the length of the airfoil-retaining section in the chordwise direction may be, for example, as follows: a propeller blade is cut in the chordwise direction, and the points of contact between the airfoil-retaining section and the skin portion are observed in the cross section, and the length in the chordwise direction between the outermost leading-edge-side point and the outermost trailing-edge-side point is measured with a ruler or vernier calipers; or the points of contact between the airfoil-retaining section and the skin portion are observed by a CT scanning to measure the length in the chordwise direction between the outermost leading-edge-side point and the outermost trailing-edge-side point.

The shorter the spanwise length of the local airfoil-retaining section is, the more possible it is to locally reinforce the airfoil shape. Thus, such a spanwise length is preferable. For example, the local airfoil-retaining section more preferably has a spanwise length of 20% or less, still more preferably 10% or less, of the blade length. In the case of a common hollow structure, the local airfoil-retaining section more preferably has a length of 20% or less, still more preferably 10% or less, of the longitudinal length of the hollow structure. In addition, the shorter the chordwise length of the local airfoil-retaining section is, the more possible it is to reinforce the airfoil shape locally. This is preferable. The local airfoil-retaining section more preferably has a chordwise length of 20% or less, still more preferably 10% or less, of the chord. The shape of the local airfoil-retaining section is not particularly limited as long as the shape can reinforce the airfoil structure. As shown in Fig. 7, examples of the shape of a structure which connects the opposed faces of the skin portion include a columnar shape 701, flat-plate shape 702, cross-shaped-cross-sectional plate 703, a corrugated-plate shape 704. Furthermore, providing such an airfoil-retaining section near the leading edge of a propeller blade makes it possible to obtain a more effective reinforcing effect against a load applied when an object impinges against the propeller blade.

### [Fiber-reinforced Resin Layer]

A propeller blade according to the present invention has a fiber-reinforced resin layer on the outer surface side of the first structure.

The fibers used in the fiber-reinforced resin layer may be discontinuous fibers or continuous fibers, and from the viewpoint of mechanical properties, the fibers preferably contain at least continuous fibers. In addition, the fiber-reinforced resin layer preferably covers the whole outer surface of the first structure with a fiber-reinforced resin layer.

In addition, examples of the fiber material include: organic fibers such as aramid fiber, polyethylene fiber, and polyparaphenylenebenzoxazole (PBO) fiber; inorganic fibers such as glass fiber, carbon fiber, silicon carbide fiber, alumina fiber, tyranno fiber, basalt fiber, and ceramic fiber; metal fibers such as stainless-steel fiber and steel fiber; other fibers produced using boron fiber, natural fiber, modified natural fiber, or the like; and the like. Among these, carbon fiber is preferable in the present invention. Among these reinforced fibers, carbon fiber is light in weight, has particularly excellent properties in specific strength and specific elastic modulus, and also has excellent heat resistance and chemical resistance. Furthermore, PAN-based carbon fibers are more preferable because high-strength carbon fibers can be easily obtained.

In addition, the resin may be, for example: a thermosetting resin such as epoxy resin, unsaturated polyester resin, vinyl ester resin, phenol resin, epoxy acrylate resin, urethane acrylate resin, phenoxy resin, alkyd resin, urethane resin, maleimide resin, or cyanate resin; polyethylene terephthalate (PET) resin; polybutylene terephthalate (PBT) resin; polytrimethylene terephthalate (PTT) resin; polyethylene (PE) resin; polypropylene (PP) resin; styrene-based resin; polyoxymethylene (POM) resin; polyamide (PA) resin; polycarbonate (PC) resin; polymethylene methacrylate (PMMA) resin; polyvinyl chloride (PVC) resin; polyphenylene sulfide (PPS) resin; polyphenylene ether (PPE) resin; modified PPE resin; polyimide (PI) resin; polyamideimide (PAI) resin; polyetherimide (PEI) resin; polysulfone (PSU) resin; modified PSU resin; polyethersulfone resin; polyketone (PK) resin; polyaryleneetherketone resin (PAEK); polyalylate (PAR) resin; polyethernitrile (PEN) resin; phenol-based resin; phenoxy resin; fluorine-based resin such as polytetrafluoroethylene resin; furthermore, thermoplastic elastomer or the like such as polystyrene-based resin, polyolefin-based resin, polyurethane-based resin, polyester-based resin, polyamide-based resin, polybutadiene-based resin, polyisoprene-based resin, fluorine-based resin, copolymer or modified product thereof, or thermoplastic resin obtained by blending two or more kinds thereof; or the like. Furthermore, the polyaryleneetherketone resin (PAEK) may be, for example, polyetherketone (PEK), polyetheretherketone (PEEK), polyetheretherketoneketone (PEEKK), polyetherketoneketone (PEKK), polyetherketoneetherketoneketone (PEKEKK), polyetheretherketoneetherketone (PEEKEK), polyetheretheretherketone (PEEEK), polyetherdiphenyletherketone (PEDEK), a copolymer or modified product thereof, a resin obtained by blending two or more kinds thereof, or the like.

In the present invention, the fiber-reinforced resin layer is provided on the outer surface side of the first structure, but may be provided over the whole outer surface of the first structure. On the other hand, the fiber-reinforced resin layer may be provided not to cover part of the outer surface, to the extent that the object of the present invention can be achieved.

### [Method of Producing Propeller Blade]

A method of producing a hollow structure according to the present invention will be described, taking, as an example, a method of producing a propeller blade. A propeller blade can be produced, for example, by the below-described method. However, the producing method is not limited to this method.

The producing process of the propeller blade illustrated below includes a step of producing a first structure, a step of providing a fiber-reinforced resin layer on the outer layer of the first structure, and a curing step of curing the resin of the fiber-reinforced resin layer.

The first structure can be molded using a common method of producing a molded product. Using a 3D printing method for the production makes it possible to integrally produce an airfoil-retaining structure with a high degree of freedom, and is preferable from the viewpoint of weight reduction and high precision. Examples of the 3D printing method include a liquid-phase photopolymerization method, material injection method, binder injection method, powder bed fusion method, material extrusion method, and sheet lamination method. A producing method that requires no supporting member is preferable. For example, an SLS method does not involve removing a supporting member in a hollow section after molding.

The subsequent curing step of providing a fiber-reinforced resin layer, and curing the resin is not particularly limited. Examples of the curing step include: a method in which a fiber-reinforced resin sheet obtained by impregnating reinforced fibers with a resin is preformed on the outer surface side of the first structure, the resulting product is then placed in a mold, and the resin is cured and molded by autoclaving or press-molding: and a method in which a fiber-reinforced resin layer is wound on the outer surface side of the first structure by filament winding, the resulting product is then placed in a mold, and the resin is cured and molded using an oven or by autoclaving or press-molding. Further examples include a method in which reinforced fibers are disposed on the skin layer of the first structure by braiding, and undergoes RTM molding in a mold. Whichever method may be adopted, it is preferable to integrally mold and cure the pressure surface and suction surface of the propeller blade. In this case, it is easier to obtain a propeller blade having higher strength than in a case where the skin for the pressure surface and the skin for the suction surface are separately molded, and joined. Besides, the weight of the propeller blade can be reduced.

When the resin of the fiber-reinforced resin layer is cured, a double-sided mold composed of the upper mold and the lower mold is used. Examples include a method in which the lower mold is shaped into the suction surface of a propeller blade, and the upper mold is shaped into the pressure surface of the propeller blade, to mold the surface shape of the propeller blade. When this is done, it is preferable to press the fiber-reinforced resin layer against the mold surface, in order to transfer the shape of the mold to the surface of the propeller blade. During molding, it is desirable to perform molding at a temperature lower than the glass transition temperature of the resin used for the first structure. Performing curing in such a manner makes it possible to retain the shape of the first structure during curing, and to apply molding pressure to the fiber-reinforced resin layer to be provided on the outer layer.

During molding, vacuuming may be performed as required. It is also possible that forming a shape in a mold is followed by after-curing in an oven.

A method of providing a spar cap in a propeller blade is not particularly limited. For example, it is possible that, when a fiber-reinforced resin sheet is preformed on the outer surface side of a first structure, the fiber-reinforced resin sheet is preformed in a recess provided for a spar cap and in the first structure, whereby the position of the spar cap can be controlled precisely. In addition, the spar cap is preferably composed of a fiber-reinforced composite material, and it is desirable to use a fiber base material oriented unidirectionally in the spanwise direction. Such a configuration can provide effective reinforcement. After this step, a fiber-reinforced resin layer can be further formed.

In addition, a metal layer may be provided on a propeller blade as a countermeasure against erosion and lightning. Examples of such a countermeasure include a method in which a portion where a metal member is to be disposed is preliminarily dented, and a fiber-reinforced resin layer for a propeller blade is molded, and then bonded; and a method in which, when a fiber-reinforced resin layer is molded, a metal member is disposed in a mold, and molded in the form of an integrated product. In addition, it is possible that, to position a metal member, the first structure may be provided with a slit or a hole, and part of the metal member may be provided with a positioning structure corresponding to the slit or the hole, so as to achieve the positioning.

Examples of a fiber-reinforced resin sheet used for a preform include a prepreg. The volume content of the reinforced fibers preferable for the prepreg is preferably 40% or more and less than 80%, more preferably 45% or more and less than 75%, still more preferably 50% or more and less than 70%.

The amount of the reinforced fibers contained in the prepreg is preferably 50 g/m² or more and 1000 g/m² or less as the areal weight of the reinforced fibers to be formed into a sheet-like object. In some of the cases where the areal weight is too small, a pore in which no reinforced fibers are present is generated in the face of the prepreg. Bringing the areal weight to 50 g/m² or more makes it possible to eliminate a pore that will become the starting point of fracture. In addition, bringing the areal weight to 1000 g/m² or less enables heat to be uniformly transmitted to the inside during preheating for molding. The areal weight is more preferably 100 g/m² or more and 600 g/m² or less, still more preferably 150 g/m² or more and 400 g/m² or less, in order to achieve both structural uniformity and heat-transmission uniformity. The areal weight of the reinforced fiber is measured by cutting out a 10 cm square region from a reinforced-fiber sheet-like object, measuring the mass of the object, and dividing the mass by the area of the object. Measurements are made at 10 different parts of the reinforced-fiber sheet-like object, and the average of the measurements is adopted as the areal weight of the reinforced-fiber.

In addition, an incised prepreg can be used as the above-described prepreg. An incised prepreg is a prepreg having incisions that are regularly distributed over the whole surface. Using the incised prepreg makes it easier to generate openings and deviations at the incised positions, and enhances the extensibility of the prepreg in the direction of the reinforced fibers of the prepreg. In addition, a flow during compression molding causes the incised positions to be opened, and causes the fiber bundles of the reinforced fibers to be separated from one another, thereby allowing the prepreg to exhibit flexibility, and enhancing the flowability. Configuring such that the prepreg is flowable in this manner makes it possible that the reinforced fibers reach the ends, decrease the regions having excessive resin, and obtain an oblate and lightweight member having excellent mechanical properties and appearance. From the viewpoint of flowability, the incisions are preferably made over the whole prepreg in the thickness direction.

### Examples

Below, the present invention will be described more specifically with reference to Examples. However, the present invention should not be construed as being limited to the description in the section of such Examples.

### (Example 1)

A nylon-6-made hollow structure was produced using an SLS 3D printing method, as follows: the hollow section was a rectangular parallelepiped having a height of 50 mm, a width of 30 mm, and a length of 210 mm, and having an opening on one side in the length direction; the skin portion was a rectangular parallelepiped structure having a thickness of 2 mm, a height of 54 mm, a width of 34 mm, and a length of 212 mm; assuming that the midpoint of the side corresponding the opening side in the width direction of the bottom face of the structure is the origin, that the length direction is the X axis, that the width direction is the Y axis, and that the height direction is the Z axis, the XY coordinates satisfy the formula, y = 10 sin(6 πx/210) [mm]; and a retaining section was integrally molded with the skin portion, in which the retaining section had a thickness of 1 mm on each of both sides of a curved plane vertically connected in the height direction in the hollow section of the structure (that is, the Z coordinate satisfies 2 (mm) to 52 (mm)). The thickness of the skin portion of the structure was 2 mm, and the thickness of the retaining section was 2 mm. One side of the ends in the longitudinal direction of the structure had the skin formed on. On the other side with no skin formed, the hollow section was opened.

Next, prepreg F6273C-07M produced by Toray Industries, Inc. was preformed on the surface of the skin of the structure, then bagged with a film, vacuumed, and heated at 140°C for 2 hours to be cured.

With the structure thus obtained, a line segment was set so as to connect a face of joining including a point of joining to the opposed face of joining, and have the shortest length, in which the point of joining was in the upper part of a position in the height direction, the position being central in the width direction at 70 mm in the longitudinal direction from the side where the hollow section was opened. The line segment was connected to a point of joining in the lower part of the position in the height direction, the position being central in the width direction at 70 mm in the longitudinal direction from the side where the hollow section was opened. A projected image projected perpendicularly to the cross section perpendicular at the midpoint of the line segment was a rectangle of 34 mm × 212 mm, and a rectangle that circumscribed the projected figure on the projected image projected perpendicularly to the cross section, and had the minimum area gave a straight line connecting the midpoints of the short sides of a 340 mm × 210 mm rectangle. A straight line connecting the midpoints of the short sides of the 340 mm × 210 mm rectangle at a height of 25 mm crosses the retaining section at seven points and the skin portion at one point.

Having the above-described configuration provides a light, high-strength, and highly precise structure.

### Industrial Applicability

A hollow structure, particularly a propeller blade, according to the present invention is a propeller blade having a hollow structure having excellent productivity, light weight, and high quality, and can be suitably used for propellers for UAM (Urban Air Mobility), UAS (Unmanned Aircraft Systems), drones, aircrafts, and the like.

### Reference Signs List

101, 201, 801: Fiber-reinforced resin layer
102, 202, 301, 401, 601, 802, 901: Skin portion
803, 902: Retaining section
103, 302, 404, 602: Airfoil-retaining section
104, 804: Hollow section
203: Spar cap
304: Another airfoil-retaining section (local airfoil-retaining section)
402: Bent portion
403: Curved portion
602: Another airfoil-retaining section (local airfoil-retaining section)
603: Another retaining section (local retaining section)
701: Example of airfoil-retaining section in column shape
702: Example of airfoil-retaining section in flat-plate shape
703: Example of airfoil-retaining section in the form of plate having cross-shaped cross section
704: Example of airfoil-retaining section in corrugated-plate
805: One of points of joining
806: Other end point (point of joining) of the shortest line segment connecting face of joining including point of joining 805 to opposed face of joining
807: Midpoint of line segment connecting points of joining 805 and 806
808: Cross section taken by cutting the structure along face including cross section perpendicular to line segment connecting points of joining 805 and 806
809: Rectangle that circumscribes cross section 808, and has minimum area
810: Straight line connecting midpoints of short sides of rectangle 809 between two points
811: Straight line parallel to straight line 810
903: Face of joining

## Claims

1. A hollow structure made of a resin, comprising:
a skin portion forming the outer surface of said hollow structure;
a retaining section integrated with said skin portion, and supporting said skin portion from the inside thereof; and
a space in the structure;
wherein at least one of said retaining sections is configured such that, in a cross section (referred to as a "cross section 1" for convenience) taken by cutting the structure along a plane passing through the midpoint of a line segment, which is defined as the shortest line segment from a point of joining and connecting a face of joining including said point of joining to the opposed face of joining, and being perpendicular to said line segment, a straight line crosses said skin portion and said retaining section at three or more points, said straight line being parallel to a straight line (referred to as a "straight line 1" for convenience) connecting the midpoints of the short sides of a rectangle defined so as to circumscribe said cross section, and have the minimum area.

2. The hollow structure according to claim 1, comprising a fiber-reinforced resin layer on the outer surface of the structure.

3. A propeller blade comprising said hollow structure according to claim 1 or 2, wherein at least one of said retaining sections is configured such that a face (referred to as a "cross section 2" for convenience) dividing the pressure surface side and the suction surface side is parallel to said cross section 1, and such that a straight line passing through the blade tip and the blade root on said cross section 2 crosses said skin portion and said retaining section at three or more points, and is parallel to said straight line 1.

4. The propeller blade according to claim 3, wherein at least one of said retaining sections has a bent portion bent in the chordwise direction.

5. The hollow structure according to claim 3 or 4, wherein at least one of said retaining sections has a lightening portion, and said lightening portion is provided so as to be observable in a vertical cross section dividing said propeller blade into the pressure surface side and the suction surface side.

6. The propeller blade according to any one of claims 3 to 5, wherein two or more of said retaining sections are provided.

7. The propeller blade according to any one of claims 3 to 6, comprising a retaining section having a length of less than 30% of the blade length of said propeller blade in the spanwise direction, and having a length of less than 30% of the chord length of said propeller blade in the chordwise direction at the center of an airfoil-retaining section in the spanwise direction.

8. The propeller blade according to any one of claims 3 to 7, wherein the thickness of said skin portion is 15 mm or less and 0.2 mm or more.

9. The propeller blade according to any one of claims 3 to 8, wherein the thickness of said skin portion is 300% or less, taking the thickness of said fiber-reinforced resin layer as 100%.

10. The propeller blade according to any one of claims 3 to 9, wherein said skin portion has a mesh structure.

11. The propeller blade according to any one of claims 3 to 10, wherein, in the first structure, a recess is formed on the outer surface side of said skin portion at the portion of contact between said skin portion and one of said retaining sections, said one supporting the blade in the thickness direction.

12. The propeller blade according to any one of claims 3 to 11, wherein the volume of said space in the structure is 30% or more of the volume of said propeller blade.

13. The propeller blade according to any one of claims 3 to 12, wherein said resin constituting the structure is a resin the glass transition temperature of which is not observed at 90°C or less.

14. The propeller blade according to any one of claims 3 to 13, wherein the structure contains a filler.

15. The propeller blade according to any one of claims 3 to 14, wherein a carbon fiber is used as a fiber used in said fiber-reinforced resin layer.

16. The propeller blade according to any one of claims 3 to 15, wherein the structure is produced by a three-dimensional printing method.
